# EUROPEAN PATENT APPLICATION

(11) **EP 4 187 113 A1**
(43) Date of publication of application: **31.05.2023**
(21) Application number: 21217747.1
(22) Date of filing: 24.12.2021
(51) Int. Cl.: F16B 12/24, F16B 12/20

(54) **FASTENER FOR GROOVED JOINT BETWEEN FURNITURE PANELS**

(30) Priority: 29.11.2021 CN 202122958935 U
(71) Applicant: Ming Jin Wooden Products (Shenzen) Co., Ltd., Shenzhen City (CN)
(72) Inventor: CHEN, SHU-TE, Shenzhen City (CN)
(74) Representative: JD&P Patent Attorneys Joanna Dargiewicz & Partners

(57) **Abstract**

The present invention discloses a fastener for a grooved joint between furniture panels, including a connecting rod having an outer periphery which includes a first peripheral section and a second peripheral section, where the first peripheral section is a geometric cross section and the second peripheral section is of an arc shape; the first peripheral section and the second peripheral section are connected end to end; and a face of one end of the connecting rod is provided with an installation recess for turning the fastener for a grooved joint between furniture panels; an outer surface of the connecting rod is provided with a thread and a stop perpendicular to a direction of the thread; and the other end of the connecting rod is provided with a ratchet. Pre-installation is carried out before the product leaves the factory, i.e., the fastener for a grooved joint between furniture panels is clamped in an installation hole through four protrusions, so as to prevent the fastener for a grooved joint between furniture panels from falling off during transportation and spare consumers from a step of placing the fastener for a grooved joint between furniture panels in the installation hole before assembly. The fastener is convenient to install and uninstall and does not damage back panels or installation panels.

## Description

### CROSS REFERENCE TO RELATED APPLICATION

This application claims priority benefit of Chinese Application No. 202122958935.9, filed on November 29, 2021, and the entire contents of which are incorporated herein by reference.

### TECHNICAL FIELD

The present invention relates to the technical field of connectors for furniture, in particular to a fastener for a grooved joint between furniture panels.

### BACKGROUND

With the development of society and the progress of technology, cabinets such as wardrobes, bookcases, decorative cabinets and filing cabinets in modern furniture industry are made of multiple panels connected and assembled to each other. Among these panels, horizontal panels are called layer panels, vertical panels against a wall are called back panels, and vertical panels other than the back panels are called side panels.

When a back panel in the related art is installed, an upper side, a lower side, a left side and a right side of the back panel are embedded into respective grooves in other panels. The gaps between the above sides of the back panel and their respective grooves may lead to many problems, such as looseness and insecure connection between the installed back panel and other panels, and an unstable cabinet structure. For example, the patent application with Publication No. CN111503099A discloses a fastener for a grooved joint between furniture panels, but a head thereof usually penetrates a back panel to lock the back panel, thus damaging the back panel. In the case of a relocation, re-installation of the fastener after disassembly is very inconvenient and may cause an unsightly appearance, and the re-installed fastener is prone fall off.

### SUMMARY

The present invention provides a fastener for a grooved joint between furniture panels, which solves the problems that the fastener for a grooved joint between furniture panels in the related art is prone to damage the back panel during installation or prone to fall off after installation, which is not conducive to re-installation after disassembly.

To solve the above technical problem, the present invention provides a fastener for a grooved joint between furniture panels, including a connecting rod having an outer periphery which includes a first peripheral section and a second peripheral section, where the first peripheral section is a geometric cross section and the second peripheral section is of an arc shape; the first peripheral section and the second peripheral section are connected end to end; and a face of one end of the connecting rod is provided with an installation recess for turning the fastener for a grooved joint between furniture panels.

Optionally, an outer surface of the connecting rod is provided with a thread and a stop perpendicular to a direction of the thread.

Optionally, at least one joint between the first peripheral section and the second peripheral section is rounded.

Optionally, the other end of the connecting rod is provided with a ratchet.

Optionally, four protrusions are provided at a joint between the ratchet and the connecting rod, the four protrusions are separately provided at two end points of the first peripheral section and two other points radially opposite the two end points.

Optionally, the installation recess is a cross recess, a recess in the shape of an eight-spoked asterisk, a star-shaped recess, or a hexagonal hole.

Optionally, the connecting rod is of a hollow structure.

Optionally, the connecting rod is made of metal, and a triangular mark is provided at the installation recess.

Compared with the related art, the fastener for a grooved joint between furniture panels provided by the present invention has the following beneficial effects:

the present invention provides a fastener for a grooved joint between furniture panels, where the first peripheral section is a geometric section which facilitates insertion of the back panel, and after installation by rotation, the back panel is squeezed by the second peripheral section, so that the back panel is clamped, and the ratchet locks at the bottom to prevent the fastener from being unscrewed and falling off; moreover, over-rotation is prevented by an increased resistance generated by the stop provided on the connecting rod pressing against the back panel; and pre-installation is carried out before the product leaves the factory, i.e. the fastener for a grooved joint between furniture panels is clamped in an installation hole through four protruding points, so as to prevent the fastener for a grooved joint between furniture panels from falling off during transportation and spare consumers from a step of placing the fastener for a grooved joint between furniture panels in the installation hole before assembly.

The fastener for a grooved joint between furniture panels provided by the present invention is convenient to install and uninstall and is firm and reliable, and does not damage the back panel or the installation panel.

### BRIEF DESCRIPTION OF DRAWINGS

Figs. 1-3 show the structure of a fastener for a grooved joint between furniture panels of the present invention in different views.
Fig. 4 shows installation steps of the fastener for a grooved joint between furniture panels of the present invention.
Fig. 5 shows the installation steps of the fastener for a grooved joint between furniture panels of the present invention in a top view.
Fig. 6 shows an installed state of the fastener for a grooved joint between furniture panels of the present invention.

### DETAILED DESCRIPTION

The technical schemes in the embodiments of the present invention are clearly and completely described in the following with reference to the accompanying drawings of the present invention. It is obvious that the described embodiments are only some of the embodiments of the present invention instead of all the embodiments thereof. All other embodiments obtained by those of ordinary skill in the art based on the embodiments of the present invention without inventive effort are within the scope of the present invention.

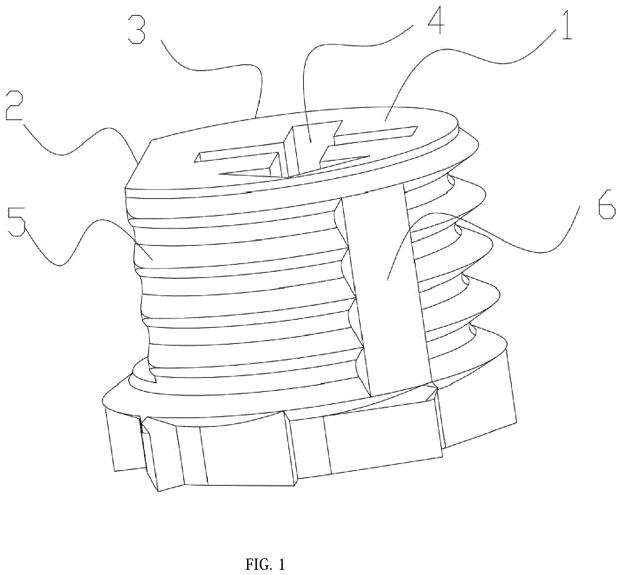

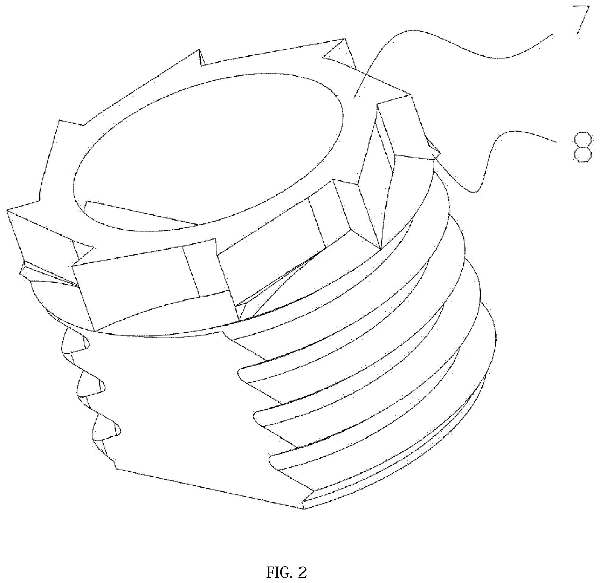

Referring to Figs. 1-3, the present invention provides a fastener for a grooved joint between furniture panels, including a connecting rod 1. An outer periphery of the connecting rod 1 includes a first peripheral section 2 and a second peripheral section 3. The first peripheral section 2 is a geometric cross section and the second peripheral section 3 is of an arc shape. The first peripheral section 2 and the second peripheral section 3 are connected end to end. A face of one end of the connecting rod 1 is provided with an installation recess 4 for turning the fastener for a grooved joint between furniture panels. A side panel can be effectively locked by means of rotation of the fastener for a grooved joint between furniture panels.

Optionally, an outer surface of the connecting rod 1 is provided with a thread 5 and a stop 6, and the stop 6 is perpendicular to a direction of the thread 5, so that a grasping force of the fastener for a grooved joint between furniture panels is increased, and meanwhile, the fastener for a grooved joint between furniture panels is prevented from being over-rotated and thus reducing the grasping force and damaging a back panel and an installation panel.

Optionally, at least one joint between the first peripheral section 2 and the second peripheral section 3 is rounded to prevent the back panel from being damaged during rotation or installation of the fastener for a grooved joint between furniture panels.

Optionally, the other end of the connecting rod 1 is provided with a ratchet 7 to prevent the fastener for a grooved joint between furniture panels from being unscrewed and falling off after being locked.

Optionally, four protrusions 8 are provided at a joint between the ratchet 7 and the connecting rod 1, the four protrusions are separately provided at two end points of the first peripheral section 2 and two other points radially opposite the two end points. When leaving the factory, the fastener is directly clamped in an installation hole to avoid falling off during transportation and spare consumers from the trouble of placing the fastener for a grooved joint between furniture panels into the installation hole before installation.

Optionally, the installation recess 4 is a cross recess, a recess in the shape of an eight-spoked asterisk, a star-shaped recess, or a hexagonal hole, which facilitates use of tools commonly used in life.

Optionally, the connecting rod 1 is of a hollow structure to save costs. The connecting rod 1 is made of metal and is firmly and reliably installed. A triangular mark 9 is provided at the installation recess 4, and when the triangular mark points to the back panel, the fastener can be stopped and prevented from being over-rotated and thus reducing the grasping force and damaging the back panel and the installation panel.

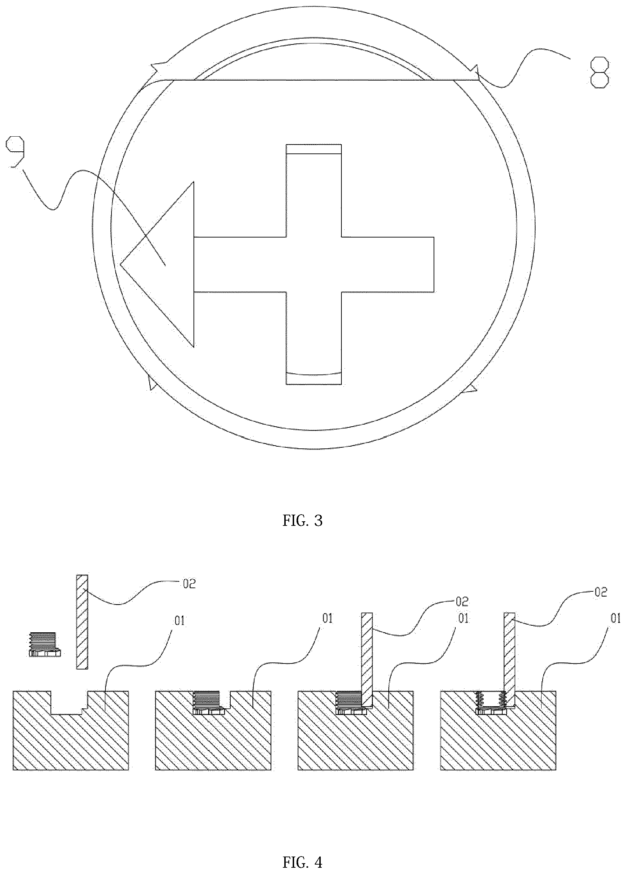

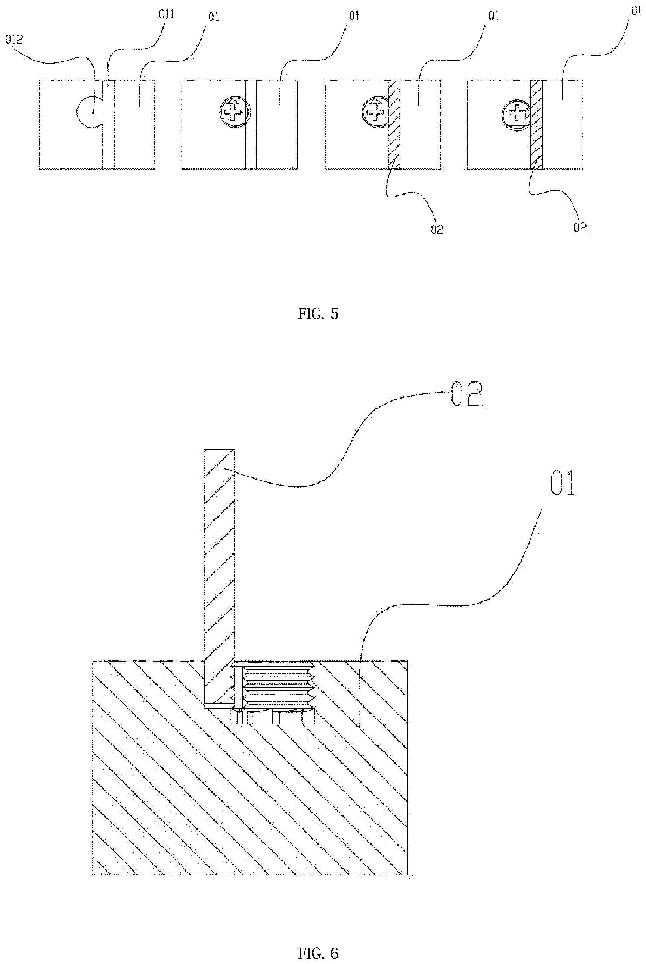

Referring to Figs. 4 and 5, an installation process of the fastener for a grooved joint between furniture panels is provided. A groove 011 and an installation hole 012 are provided beforehand in a side panel 01 to be connected to the back panel, the installation hole 012 is deeper than the groove 011, and positions thereof overlap to a certain extent. Before delivery from the factory, the fastener for a grooved joint between furniture panels is placed into the installation hole 012 with the first peripheral section 2 arranged in parallel with the groove 011. Among the four protrusions 8 on the fastener for a grooved joint between furniture panels, two protrusions 8 are in contact with a wall of the installation hole 012 away from the installation recess, and the other two protrusions 8 are in contact with the bottom where the installation hole 012 overlaps the groove 011. In this case, the fastener for a grooved joint between furniture panels is forced to make the bottom thereof reach the bottom of the installation hole 012. The four protrusions 8 just retain the fastener for a grooved joint between furniture panels in the installation hole 012, so that the fastener does not fall off. Then, the back panel 02 is inserted into the groove 011, such that the first peripheral section 2 and the back panel 02 is adjacent to each other, and then, the fastener for a grooved joint between furniture panels is rotated with a screwdriver and is stopped when the triangular mark points to the back panel, and thus the fastener for a grooved joint between furniture panels clamps and secures the back panel.

Referring to Fig. 6, the stop 6 just abuts against the back panel 02 to prevent the fastener for a grooved joint between furniture panels from being over-rotated and thus reducing the grasping force and damaging the back panel and the installation panel. Moreover, due to the rotation of the fastener for a grooved joint between furniture panels, the first peripheral section 2 and the back panel 02 change from the adjacent state to a separated state, and meanwhile the arc-shaped second peripheral section 3 begins to squeeze the back panel 02, causing deformation of the side panel 01 and the back panel 02 due to compression, which are then further locked with the ratchet 7 at the bottom, thus preventing the fastener for a grooved joint between furniture panels from being unscrewed and loosened.

To sum up, compared with the related art, the present invention provides a fastener for a grooved joint between furniture panels, where the first peripheral section is a geometric section which facilitates insertion of the back panel, and after installation by rotation, the back panel is squeezed by the second peripheral section, so that the back panel is clamped, and the ratchet locks at the bottom to prevent the fastener from being unscrewed and falling off; moreover, over-rotation is prevented by an increased resistance generated by the stop provided on the connecting rod pressing against the back panel; and pre-installation is carried out before the product leaves the factory, i.e. the fastener for a grooved joint between furniture panels is clamped in an installation hole through four protruding points, so as to prevent the fastener for a grooved joint between furniture panels from falling off during transportation and spare consumers from a step of placing the fastener for a grooved joint between furniture panels in the installation hole before assembly. The fastener is convenient to install and uninstall and does not damage the back panel or the installation panel.

It should be noted that the relative terms herein, such as "first" and "second", are used only to distinguish one entity or operation from another entity or operation, without necessarily requiring or implying any such actual relationship or sequence between these entities or operations. In addition, the terms "comprise", "include" or any variation thereof are intended to cover a non-exclusive inclusion, such that a process, method, article, or device that includes a series of elements not only includes those listed elements but also includes other elements not expressly listed or further includes elements inherent to such a process, method, article, or device.

Although the embodiments of the present invention have been shown and described, it can be understood by those of ordinary skill in the art that various changes, modifications, substitutions, and variations may be made to these embodiments without departing from the principles and concepts of the present invention, and the scope of the present invention is defined by the appended claims and their equivalents.

## Claims

1. A fastener for a grooved joint between furniture panels, **characterized in that** a connecting rod having an outer periphery which comprises a first peripheral section and a second peripheral section, wherein the first peripheral section is a geometric cross section and the second peripheral section is of an arc shape; the first peripheral section and the second peripheral section are connected end to end; and a face of one end of the connecting rod is provided with an installation recess for turning the fastener for a grooved joint between furniture panels.

2. The fastener for a grooved joint between furniture panels of claim 1, **characterized in that** an outer surface of the connecting rod is provided with a thread and a stop perpendicular to a direction of the thread.

3. The fastener for a grooved joint between furniture panels of claim 1, **characterized in that** at least one joint between the first peripheral section and the second peripheral section is rounded.

4. The fastener for a grooved joint between furniture panels of any one of claims 1-3, **characterized in that** the other end of the connecting rod is provided with a ratchet.

5. The fastener for a grooved joint between furniture panels of claim 4, **characterized in that** at least one protrusion is provided at a joint between the ratchet and the connecting rod.

6. The fastener for a grooved joint between furniture panels of claim 5, **characterized in that** there are four of the protrusions in total which are separately provided at two end points of the first peripheral section and two other points radially opposite the two end points.

7. The fastener for a grooved joint between furniture panels of claim 1, **characterized in that** the installation recess is a cross recess, a recess in the shape of an eight-spoked asterisk, a star-shaped recess, or a hexagonal hole.

8. The fastener for a grooved joint between furniture panels of claim 1, **characterized in that** the connecting rod is of a hollow structure.

9. The fastener for a grooved joint between furniture panels of claim 1, **characterized in that** a triangular mark is provided at the installation recess.

10. The fastener for a grooved joint between furniture panels of claim 1, **characterized in that** the connecting rod is made of metal.
